# EUROPEAN PATENT APPLICATION

(11) **EP 4 672 140 A1**
(43) Date of publication of application: **31.12.2025**
(21) Application number: 24184926.4
(22) Date of filing: 27.06.2024
(51) Int. Cl.: G06T 7/00, G06T 7/174

(54) **ANATOMICAL CONTOURING**

(71) Applicant: Koninklijke Philips N.V., 5656 AG Eindhoven (NL)
(72) Inventor: PAPACONSTADOPOULOS, Pavlos, Eindhoven (NL); KLAASSEN, Remy, Eindhoven (NL); HEIJMAN, Edwin, 5656AG Eindhoven (NL)
(74) Representative: Philips Intellectual Property & Standards

(57) **Abstract**

Proposed concepts thus aim to provide schemes, solutions, concepts, designs, methods and systems pertaining to generating a vector map for anatomical contouring. In particular, embodiments aim to provide a method for generating a vector map for anatomical contouring by obtaining and processing a plurality of medical images including the same anatomical region but captured using different imaging modalities or sequences to generate at least one visual characteristic value for each respective image. Based on the visual characteristic values, a vector map can then be generated describing a gradient field indicating at least one potential contour line for the anatomical region.

## Description

### FIELD OF THE INVENTION

This invention relates to the field of medical images for anatomical contouring, and in particular, to the field of vector maps for anatomical contouring.

### BACKGROUND OF THE INVENTION

During clinical pre-treatment phases in Oncology, a clinical expert (e.g., a radiologist, interventional radiologist, medical or radiation oncologist) typically utilizes patient medical image scans to localize and delineate the tumour(s). Such activity traditionally occurs with the aid of an electronic contouring tool and is often described as contouring (or delineation). This process is of utmost critical nature as it is the starting point of identifying which area of the body needs to be targeted for biopsy or removed, ablated, or irradiated depending on the choice of treatment.

The contouring tool is often an electronic paint brush or pen which allows the clinician to directly draw the tumour in 3D image space, slice-by-slice. The most common data format for storing the contours are DICOM files, similarly to medical images. The contours are saved as a series of (x, y, z) coordinates in the DICOM file, following the coordinate system of the reference image. During the activity of contouring the clinician essentially defines the boundary that separates the tumour to the healthy tissue. Such boundaries can typically be depicted visually as a contrast differentiation level between the different anatomical regions.

An ideal image modality would offer 100 % contrast differentiation between healthy tissue and cancer, making contouring much easier. However, no image modality is perfect. Different imaging modalities may offer optimum contrast differentiation in some clinical settings or tissue characteristics but not in others.

Historically, a single image modality, i.e. Computed Tomography (CT), is chosen for scanning the patient and performing the delineation. However, in recent years the role and importance of multi-modality imaging has been elevated. The principal reasons behind this shift is the greater accessibility of various image modalities within a hospital as well as the appreciation that different image modalities offer complementary information to each other and should be used for tumour delineation. A good example of such a situation is prostate cancer: multi-parametric MRI (mpMRI) is considered broadly now as the standard of care for prostate cancer diagnosis. International guidelines (e.g. PI-RADS) require that various mpMRI image sequences (e.g. T2w, DWI, DCE) are reviewed in order to identify the intra-prostatic tumour lesions. In addition, PSMA PET/CT is considered superior for Lymph Node (LN) involvement assessment for prostate cancer. As Spectral CT is also evolving, it will offer complementary information in both the primary tumour and LN assessment, via even more multi-dimensional information (e.g. Z-effective maps, Iodine maps or various virtual monoenergetic beams). In current practice, but also in future, it can only be expected that the utility of multimodality imaging will be even further enhanced.

The situation described above demonstrates that there is already a vast and diverse range of image modalities that the physician needs to consult during contouring. However, the tools via which the physician delineates/contours have not changed. Typically, an electronic contour brush/pen is still used on a single image modality, slice-by-slice, to delineate the boundary between tumour and healthy tissue. Clinicians may indeed use some image fusion and toggle between 1 or 2 image modalities, or even consult another image modality on another screen at the same time to enrich their decision making, but the approach is mostly empirical and ad-hoc. The problem is that clinicians struggle in interpreting and utilizing multi-dimensional data in an effective way as it goes beyond the natural human experience. The rise of multimodality imaging for tumour delineation is an issue for clinicians as they need to understand which modalities to use and how to use them to accurately contour the tumour. Even though efforts have been made in standardizing the preferred image sequences per clinical site, there is surprisingly little development in advanced tools that physicians can use for this purpose.

### SUMMARY OF THE INVENTION

The invention is defined by the claims.

According to examples in accordance with an aspect of the invention, there is provided a method for generating a vector map for anatomical contouring.

The method comprises: obtaining a plurality of medical images including the same anatomical region, each medical image being captured using a different imaging modality or imaging sequence; processing each of the plurality of medical images to generate at least one visual characteristic value for each respective medical image; and generating a vector map based on the generated plurality of visual characteristic values, wherein the vector map describes a gradient field indicating at least one potential contour line for the anatomical region.

Proposed concepts thus aim to provide schemes, solutions, concepts, designs, methods and systems pertaining to generating a vector map for anatomical contouring. In particular, embodiments aim to provide a method for generating a vector map for anatomical contouring by obtaining and processing a plurality of medical images including the same anatomical region but captured using different imaging modalities or sequences to generate at least one visual characteristic value for each respective image. Based on the visual characteristic values, a vector map can then be generated describing a gradient field indicating at least one potential contour line for the anatomical region.

In other words, it is proposed that by processing each of a plurality of medical images, each image being captured using a different imaging modality or imaging sequence, one or more visual characteristic values, such as contrast, can be generated for each image. The visual characteristic values for each medical image can then be used to generate a vector map, wherein the vector map describes a gradient field indicating at least one potential contour line for the anatomical region. For instance, if a majority of the plurality of medical images are showing a high contrast along the edge of a certain anatomical structure in the medical images, then these visual characteristic values may be used to generate a vector map in which a potential contour line is indicated along that edge, i.e., a vector map in which that edge has large vector gradients.

A different imaging modality refers to the use of a different image scanner, such as a CT or an MRI scanner, while a different imaging sequence refers to different scanning protocols used by the same scanner, such as different MRI sequences. Essentially, the method requires that each image is thus captured with either a unique imaging apparatus, or with the same apparatus as another image but with unique capture parameters / scanning protocols. In this way, it is ensured that each image is unique and can thus provide a variety of visual characteristic values, which can aid in construction of the vector map. A visual characteristic can be understood as comprising at least one of: contrast; sharpness; tone; gamma; texture; dynamic range; colour; saturation; white balance; and edges. These visual characteristics can thus be used to essentially locate edges within the medical images and combine this information into a single vector map describing potential contour lines.

In a simple example, two medical images are obtained, both including a tumour in a subject's stomach. One is a conventional CT image and the other a monoenergetic 40KeV image. Both images are processed to generate a brightness value for each pixel within both images. This information is then used to generate a vector map describing a gradient field pointing towards potential contour lines, i.e., indicating potential edges in the images, e.g. where bright and dark pixels are continuously next to each other. By using a plurality of medical images, rather than just one, all the information present in multimodal imaging can be utilised to generate a more accurate and/or reliable vector map for indicating a potential contour line for the anatomical region. The potential contour line may then be presented to a user/clinician.

The inventors have realised that the generation of a vector map facilitates an efficient and/or effective use of the information present across a plurality of medical images of different imaging modalities or sequences. Rather than a clinician having to manually view all of the images and work only on one, trying to keep in mind, or switching between the other images, the useful information within each image can be condensed into a single vector map which can then be used to guide the clinician while contouring. In other words, the gradient field can guide the clinician towards a suggested contour line, determined based on a generated plurality of visual characteristic values across the medical images. Accordingly, the current invention is expected to aid a physician/clinician in effective use of multimodality/multidimensional data in a more efficient way for the purpose of delineating an anatomical structure such as a tumour or an organ in a medical image.

Ultimately, an improved method for generating a vector map for anatomical contouring is provided.

In some embodiments, the method may further comprise determining at least one suggested contour line based on the vector map. For example, based on the described gradient field indicating at least one potential contour line for the anatomical region, a suggested contour line can be determined. For example, potential contour lines that are indicated with a strength over a certain threshold, e.g., with nearby gradients over a certain threshold value, can be determined as suggested contour lines. Information about where a user is currently contouring can also be taken into consideration, for instance, to determine the nearest potential contour line as a suggested contour line.

In some embodiments, the method may further comprise providing the at least one suggested contour line to a user. In this way, the user can utilise the information in order to more reliably and/or accurately contour an anatomical structure, either starting from nothing or continuing an already-begun contour line.

In some embodiments, providing the at least one suggested contour line may comprise: generating a visual representation of the at least one suggested contour line; and providing the visual representation of the at least one suggested contour line to the user. In this way, the user may easily be able to see the suggested contour line and follow it, if they wish.

In some embodiments, the visual representation may be a transparent overlay. In this way, the user can see the suggested contour line while still being able to see the medical image they are working on / contouring with. The visual representation can thus be made less intrusive.

In some embodiments, providing the at least one suggested contour line may comprise: generating a feedback signal, configured to make an input device generate tactile feedback, based on the vector map and a current position of the input device, wherein the input device comprises an electromechanical vibration system. In this way, an input device that the user is using, such as a smart pen, smart brush, or mouse, can be used to unobtrusively provide the user with the suggested contour line. For instance, this can be done by vibrating when the user moves the input device away from the suggested contour line, or by generating a stirring force within the smart pen/brush, guiding them towards the suggested contour line.

In some embodiments, the input device may comprise at least one of: a smart pen; a smart brush; a stylus; and a mouse. All these are common types of input devices that a user / clinician may use for anatomical contouring and are all capable of comprising an electromechanical vibration system.

In some embodiments, processing each of the plurality of medical images may comprise processing each of the plurality of medical images with a first model to generate at least one visual characteristic value for each medical image, wherein the at least one visual characteristic value comprises located edges in each respective medical image. Located edges are a particularly useful visual characteristic value to generate for each image such that a vector map can be generated indicating located edges, i.e., potential contour lines. In this way, information describing located edges in each medical image can be combined into one single vector map. For example, the first model may comprise an edge detection model or any other model suitable for locating edges within images.

In some embodiments, processing each of the plurality of medical images may comprise: segmenting each of the plurality of medical images; and generating at least one visual characteristic value for each respective medical image based on the segmentation of each respective medical image. For example, the medical images may be segmented into one or more anatomical structures of interest, e.g., a tumour or an organ, and other surrounding tissue. These segments can then be used to generate located edges in each medical image, which can then be used to generate the vector map indicating potential contour lines which delineate between the segments, i.e., between anatomical structure(s) and other tissue. Methods of segmenting medical images are known in the art.

In some embodiments, the method may further comprise generating an output image based on the vector map and at least one of the plurality of medical images. In this way, a user can work on a single image comprising, for example, one of the medical images with the vector map overlayed on top. Alternatively, two or more of the medical images may be blended together with the vector map overlayed on top. Alternatively, a suggested contour line may be extracted from the vector map and combined with one or more of the medical images to provide the user with a single image that they can use for easier anatomical contouring.

In some embodiments, the method may further comprise obtaining a user-generated contour line of at least one of the plurality of medical images, and wherein generating the vector map is further based on the user-generated contour line. This facilitates the generation of a vector map that can be more useful to the user, taking into account one or more contour lines that the user has already started drawing. For instance, the vector map can then be tuned towards indicating a continuation of the user's already-begun contour line(s).

In some embodiments, the method may further comprise obtaining an identity of a user, and wherein generating the vector map is further based on the identity of the user. In this way, the vector map can be personalized to the user, such as a clinician or physician. For example, if the user is seen to generally ignore indicated contour lines determined largely from a medical image of a certain modality but they always follow contour lines determined largely from a medical image of a different modality, then future vector maps can weight information from the user's preferred modality more heavily.

In some embodiments, generating the vector map may be further based on the anatomical region included in the plurality of medical images. For example, if the anatomical region is a subject's heart, a visual characteristic value of a medical image of one modality or sequence may be weighted more than a visual characteristic value of a medical image of another modality or sequence when generating the vector map. In reality, some imaging modalities/sequences are more useful when imaging one particular anatomical region over another, and this may be taken into account when generating the vector map based on information derived from images of different modalities/sequences.

According to another aspect of the invention, there is provided a computer program comprising code means for implementing the method of any herein disclosed method when said program is run on a processing system.

According to another aspect of the invention, there is provided a system for generating a vector map for anatomical contouring. The system comprising an input interface configured to: obtain a plurality of medical images including the same anatomical region, each medical image being captured using a different imaging modality or imaging sequence; and a processor arrangement configured to: process each of the plurality of medical images to generate at least one visual characteristic value for each respective medical image; and generate a vector map based on the generated plurality of visual characteristic values, wherein the vector map describes a gradient field indicating at least one potential contour line for the anatomical region.

In some embodiments, the system may further comprise an input device, wherein the input device comprises an electromechanical vibration system.

Thus, there may be proposed concepts for generating a vector map for anatomical contouring, and this may be done based on the processing of a plurality of medical images including the same anatomical region, each medical image being captured using a different imaging modality and/or sequence.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a method for generating a vector map for anatomical contouring according to a proposed embodiment;
Fig. 2A is a diagram showing a simplified medical image including an anatomical structure and a contour line;
Fig. 2B is a diagram showing a simplified example vector map;
Fig. 3 is a flow diagram of a method for generating a vector map for anatomical contouring according to a proposed embodiment;
Fig. 4 is a flow diagram of a method for generating a vector map for anatomical contouring according to a proposed embodiment;
Fig. 5 is a flow diagram of a method for generating a vector map for anatomical contouring according to a proposed embodiment;
Fig. 6 is a flow diagram of a method for generating a vector map for anatomical contouring according to a proposed embodiment;
Fig. 7 is a simplified block diagram of a system for generating a vector map for anatomical contouring according to a proposed embodiment; and
Fig. 8 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to generating a vector map for anatomical contouring. According to proposed concepts, a number of possible solutions may be implemented separately or jointly. That is, although these possible solutions may be described below separately, two or more of these possible solutions may be implemented in one combination or another.

Embodiments of the invention aim to provide a method for generating a vector map for anatomical contouring. This can be achieved by obtaining a processing a plurality of medical images to generate a respective plurality of visual characteristic values. Based on the visual characteristic values, a vector map can thus be generated.

Proposed concepts thus aim to provide schemes, solutions, concepts, designs, methods and systems pertaining to generating a vector map for anatomical contouring. In particular, embodiments aim to provide a method for generating a vector map for anatomical contouring by obtaining and processing a plurality of medical images including the same anatomical region but captured using different imaging modalities or sequences to generate at least one visual characteristic value for each respective image. Based on the visual characteristic values, a vector map can then be generated describing a gradient field indicating at least one potential contour line for the anatomical region.

In other words, it is proposed that by processing each of a plurality of medical images, each image being captured using a different imaging modality or imaging sequence, a visual characteristic value, such as contrast, can be generated for each image. The visual characteristic values for each medical image can then be used to generate a vector map, wherein the vector map describes a gradient field indicating at least one potential contour line for the anatomical region. For instance, if a majority of plurality of medical images are showing a high contrast along the edge of a certain anatomical structure in the medical images, then these visual characteristic values may be used to generate a vector map in which a potential contour line is suggested along that edge.

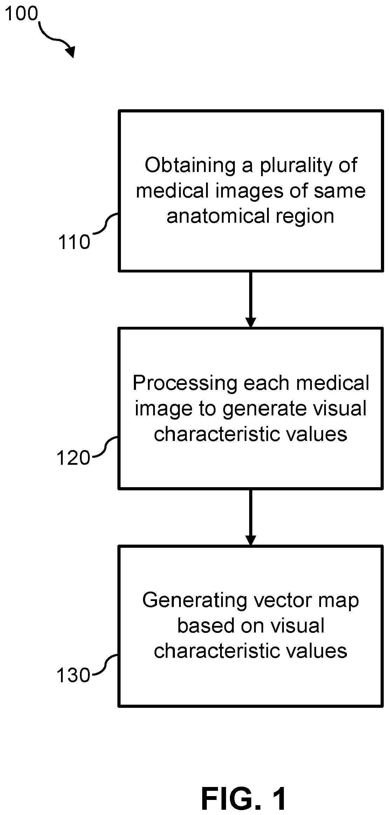

Referring now to Fig. 1, there is depicted a simplified flow diagram of a method 100 for generating a vector map for anatomical contouring according to a proposed embodiment.

The method 100 begins with the step 110 of obtaining a plurality of medical images including the same anatomical region, each medical image being captured using a different imaging modality or imaging sequence. A different imaging modality refers to the use of a different image scanner, such as a CT or an MRI scanner, to capture the image while a different imaging sequence refers to using different scanning protocols with the same scanner, such as different MRI sequences. Essentially, what is important is that each image is unique with respect to the other medical images; that means each image is captured either with a unique imaging apparatus, or with the same apparatus as another image but with unique capture parameters / scanning protocols. In this way, it is ensured that each image is unique and thus can provide a variety of visual characteristic values, which can aid in the construction of the vector map.

Each medical image being captured using a different imaging modality or imaging sequence may thus be understood as each medical image being captured with at least one unique capture parameter, with respect to the other medical images. A capture parameter may comprise: an image scanner used to capture the image; a scanning protocol used to capture the image; and/or a scan parameter such as energy, time, or resolution, etc. An anatomical region may also be understood as what anatomical structures are being imaged. In other words, the plurality of medical images include at least one anatomical structure in common, and preferably, include all the same anatomical structures as one another.

In some embodiments, an imaging modality or imaging sequence may comprise at least one of: conventional CT imaging; spectral CT imaging; monoenergetic CT imaging; iodine density imaging; Z-effective imaging; x-ray imaging; MRI imaging; multi-parametric MRI imaging; and PSMA PET/CT imaging. These are imaging modalities/sequences that are currently commonly used in anatomical contouring. In the embodiment of method 100, the plurality of medical images comprises one image of each of the above-mentioned different imaging modality/sequences.

In step 120, each of the plurality of medical images is processed to generate at least one visual characteristic value for each respective medical image. In some embodiments, a visual characteristic may comprise at least one of: contrast; sharpness; tone; gamma; texture; dynamic range; colour; saturation; white balance; and edges. These visual characteristics can be used to characterize each medical image and identify potential contour lines. In other words, these visual characteristics can be used to essentially locate edges within the medical images and combine this information into a single vector map indicating potential contour lines. For instance, if a majority of the plurality of medical images are showing a high contrast along the edge of a certain anatomical structure in the medical images, then these visual characteristic values may be used to generate a vector map in which a potential contour line is indicated along that edge.

In step 130, a vector map is generated based on the generated plurality of visual characteristic values, wherein the vector map describes a gradient field indicating at least one potential contour line for the anatomical region. Essentially, the vector map is a 2D representation of the information contained in the visual characteristic values of the plurality of medical images and can guide a clinician/user towards a potential contour line. For instance, each point on the vector map may point towards the nearest potential contour line, such that a clinician may be guided towards it, the gradient field being based on the plurality of visual characteristic values.

In this embodiment, generating the vector map 130 is further based on the anatomical region included in the plurality of medical images. For example, if the anatomical region is a subject's heart, a visual characteristic value of a medical image of one modality or sequence may be weighted more than a visual characteristic value of a medical image of another modality or sequence when generating the vector map. In reality, some imaging modalities/sequences are more useful when imaging one particular anatomical region over another, and this may be taken into account when generating the vector map based on information derived from images of different modalities/sequences. This, however, is an optional feature and is not necessary for performing the method 100.

In some embodiments, prior to step 130, the plurality of medical images may be re-sliced and co-registered in order to better accommodate the generation of the vector map. This ensures that the anatomical structures in the medical images are properly aligned so that features in the medical images can be properly extracted and represented in the vector map.

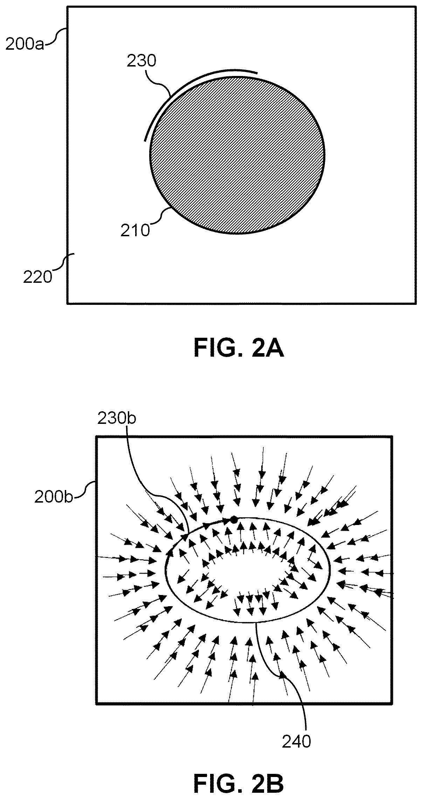

Referring now to Fig. 2A, there is depicted a diagram showing a simplified medical image 200a including an anatomical structure 210 and a contour line 230. This is a simplified example of how a contour line 230, for instance one drawn by a user, on a medical image 200a could look. For instance, the user is trying to draw a contour line 230 at the edge of the anatomical structure 210, where it meets healthy/surrounding tissue 220. The anatomical structure 210 may be, for example, a tumour or an organ or a bone. Depending on the visual characteristics of the medical image 200a, especially at the edges of the anatomical structure 210, this may be difficult to do. A vector map to help guide the user in finishing the contour line 230 would therefore be beneficial.

Referring now to Fig. 2B, there is depicted a diagram showing a simplified example vector map 200b based on medical images with the same configuration as image 200a of Fig. 2A. The gradient field of the vector map 200b is pointing towards a potential contour line 240, which follows the edge of the anatomical structure 210 seen in Fig. 2A. The edge of the anatomical structure 210 was identified based on visual characteristic values of the medical image 200a, for instance, lines that indicate a sudden change in brightness. Line 230b is a representation of the contour line 230 from Fig. 2A, and thus it can be seen how the vector map 200b could help a user finish the contour line 230 by following the potential contour line 240 pointed to by the gradient field. No matter where the user is on the vector map 200b, they are pointed towards the potential contour line 240. If there is more than one potential contour line in the vector field, the user may be pointed towards the nearest and/or more certain one. It can thus be seen how the vector map is a 2D representation of the information contained in the visual characteristic values of the plurality of medical images and can guide a clinician/user towards a potential contour line.

In other words, the vector map 200b can be considered the result of a cost function, providing the user with an optimal combination of all available features throughout the plurality of medical images in a single 2D representation, where pixel intensities represent the resulting overall cost for that pixel. This could be, for instance, to emphasize where edges are located, when an edge detection model has been used, based on all the plurality of medical images. The vector map 200b can thus be used to provide a user with an overlay, for example, of a suggested best trajectory to follow during contouring based on visual characteristic values of each medical image as well as, in some embodiments, directionality based on the current position and path of the contouring brush - be that a smart pen, a smart brush, or a mouse.

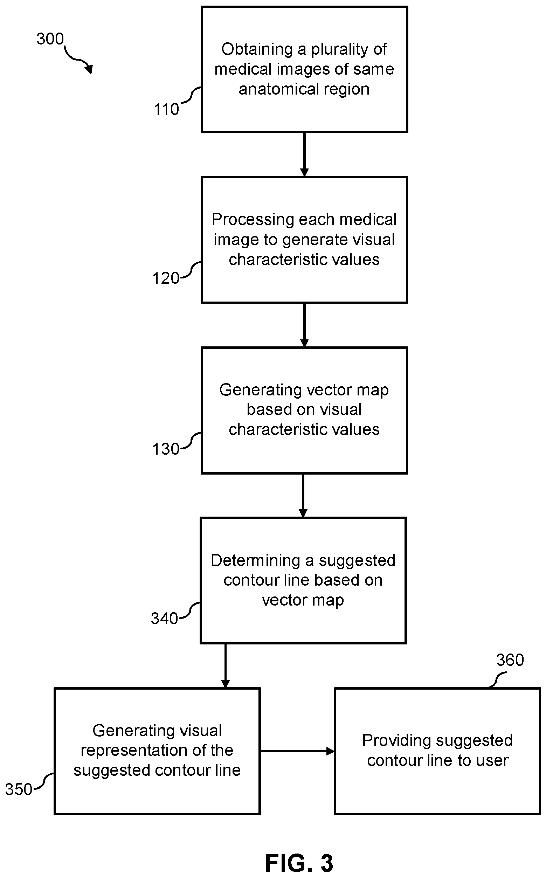

Referring now to Fig. 3, there is depicted a flow diagram of a method 300 for generating a vector map for anatomical contouring according to a proposed embodiment.

Steps 110, 120, and 130 are substantially the same as have been described in relation to the method 100 in Fig. 1. In step 340, at least one suggested contour line is determined based on the vector map. For example, based on the described gradient field indicating at least one potential contour line for the anatomical region, a suggested contour line can be determined. For example, potential contour lines that are indicated with a strength over a certain threshold, e.g., with nearby gradients over a certain threshold value, can be determined as suggested contour lines. Information about where a user is currently contouring can also be taken into consideration, for instance, to determine the nearest potential contour line as a suggested contour line. The at least one suggested contour line may then be provided to a user - in this way, the user can utilise the information in order to more reliably and/or accurately contour an anatomical structure, either starting from scratch or continuing an already-begun contour line.

In this embodiment, the at least one suggested contour line is provided to the user via steps 350 and 360, however, in other embodiments, it may be provided in any suitable way. In step 350, a visual representation of the at least one suggested contour line is generated. In step 360, the visual representation of the at least one suggested contour line is provided to the user. In this way, the user may easily be able to see the suggested contour line and follow it, should they wish.

In this embodiment, the visual representation is a transparent overlay. In this way, the user can see the suggested contour line while still being able to see the medical image they are working on / contouring. The visual representation can thus be made less intrusive. In other embodiments, however, the visual representation may not be a transparent overlay, but rather, may be provided as a fully opaque image by itself, or may be combined with one or more other images.

To provide the visual representation to the user, the visual representation may be output to a display device, for example, a monitor, a screen, or a headset.

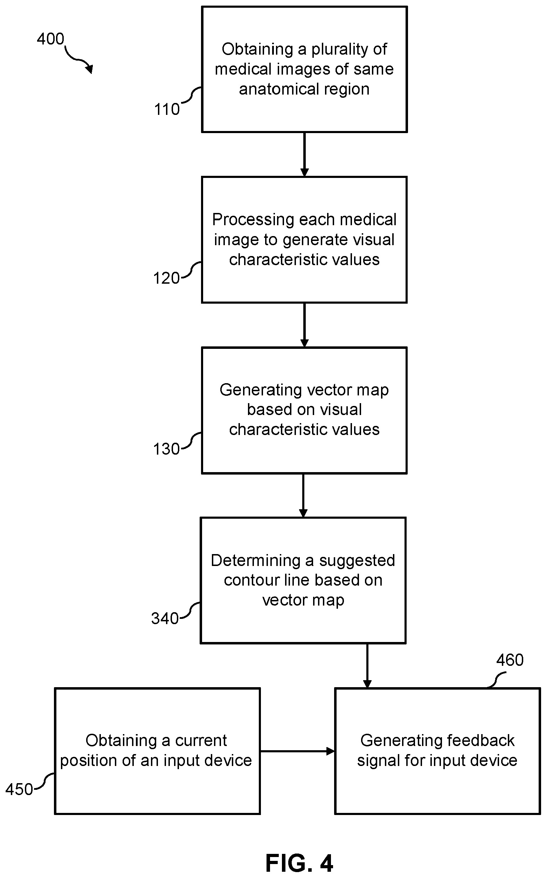

Referring now to Fig. 4, there is depicted a flow diagram of a method 400 for generating a vector map for anatomical contouring according to a proposed embodiment.

Steps 110, 120, 130, and 340 are substantially the same as have been described in relation to the methods 100 and 300 in Figs. 1 and 3 respectively. In step 450, a current position of an input device is obtained. In step 460, a feedback signal is generated, configured to make the input device generate tactile feedback, based on the vector map and the current position of the input device, wherein the input device comprises an electromechanical vibration system. In this embodiment, the input device is a smart pen. In other embodiments, the input device may comprise a smart brush, a stylus or a mouse. All these are common types of input devices that a user / clinician may use for anatomical contouring and are all capable of comprising an electromechanical vibration system.

In this way, an input device that the user is using, such as a smart pen, smart brush, or mouse, can be used to unobtrusively provide the user with the suggested contour line. For instance, this can be done by vibrating when the user moves the input device away from the suggested contour line, or by generating a stirring force within the smart pen/brush, guiding them towards the suggested contour line. In other words, the user is essentially provided with a smart tool capable of reacting in real time to contouring movements and triggering active tactile feedback to guide the user during contouring via a mechanical reaction system. The tactile feedback can be, for example, a small vibration notifying a user that they have crossed a potential contour line. Alternatively, or in addition, a smart tool, such as a pen or brush, may be able to change a feeling of texture as the tool travels into an area that is away from a potential/suggested contour line. This feeling of texture can mimic the feeling of crossing a park through grass or via a sidewalk pavement, for example.

In some embodiments, a stirring force can be generated in a smart tool to gently nudge a user towards a potential/suggested contour line. This stirring force can be exerted to a user's hand to push the tool in the direction of the gradient of the vector map, i.e., towards a potential/suggested contour line. If the user insists on going another direction, the smart tool will not be persistent but will let the user draw their preferred way.

In some embodiments, vector map may used to generate a feedback signal configured to guide a medical tool/apparatus, for example, to guide a tool to follow a potential contour line, i.e., areas where vector gradients are largest.

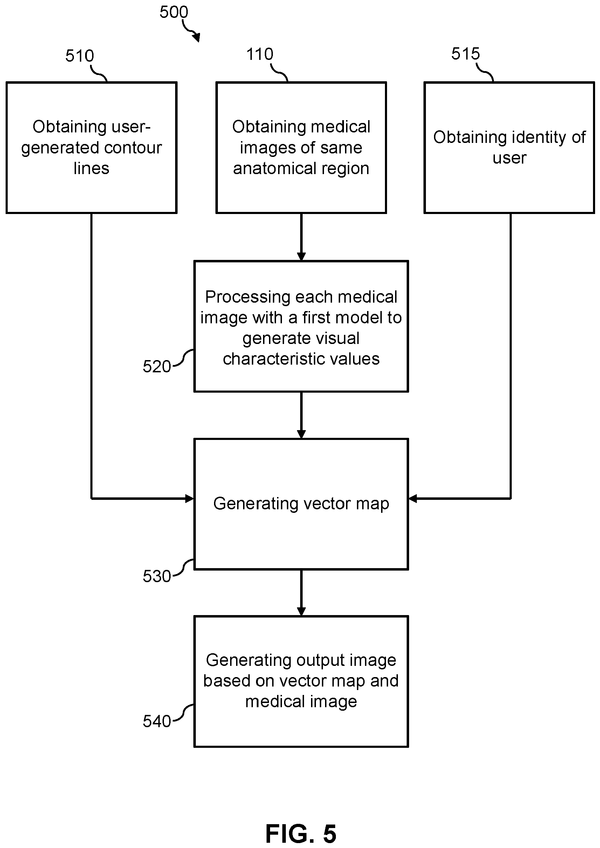

Referring now to Fig. 5, there is depicted a flow diagram of a method 500 for generating a vector map for anatomical contouring according to a proposed embodiment. Step 110 is substantially the same as has been described in relation to method 100 in Fig. 1.

In step 510, at least one user-generated contour line of at least one of the plurality of medical images is obtained. Generating the vector map in step 530 is then further based on the at least one user-generated contour line. This facilitates the generation of a vector map that can be more useful to the user, taking into account one or more contour lines that the user has already started drawing on one or more of the plurality of medical images. The vector map can then be tuned, for example, towards indicating a continuation of the user's already-begun contour line(s).

In step 515, the identity of a user is obtained. Generating the vector map in step 530 is then further based on the obtained identity of the user. In this way, the vector map can be personalized to the user, such as a clinician or physician. For example, if the user is seen to generally ignore indicated contour lines determined largely from a medical image of a certain modality/sequence but they always follow contour lines determined largely from a medical image of a different modality/sequence, then future vector maps can weight information from the user's preferred modality/sequence more heavily.

In other words, for example, after contouring is completed, the contour line can be projected on the vector map, and a post-contouring analysis can be performed to indicate which of the plurality of medical images contributed most to a low cost of the accepted contour-pixels, i.e., the pixels which the user's actual contour line followed. In this way, the method can facilitate learning which image modalities are most likely to provide the best potential contour lines to a user, either user-specifically or, in some embodiments, user-agnostically. This information can then be used in future to generate more useful vector maps. Given enough data, a physician-specific atlas of best-suited image modalities/sequences can thus be created in some embodiments. Based on this information, the generation of vector maps can gradually adapt to the physician's behaviour. Another application from this vector learning could also be to use it as input for a machine-learning model, providing a-priori knowledge on which image modalities/sequences provide the most reliable and/or accurate information for proper contouring of specific anatomical structures or generally.

In step 520, each of the plurality of medical images is processed with a first model to generate at least one visual characteristic value for each medical image, wherein the at least one visual characteristic value comprises located edges in each respective medical image. Located edges are a particularly useful visual characteristic value to generate for each image such that a vector map can be generated indicating located edges, i.e., potential contour lines. In this way, information describing located edges in each medical image can be combined into one single vector map. For example, the first model may comprise an edge detection model or any other suitable model for locating edges.

In step 530, the vector map is thus generated based on the located edges of each medical image, the user-generated contour line(s), and the identity of the user. In other embodiments of method 500, the user-generated contour lines and/or identity of the user may not be considered and steps 510 and 515 can be ignored.

In step 540, an output image is generated based on the vector map and at least one of the plurality of medical images. In this way, a user may be able to work on a single image comprising, for example, one of the medical images with the vector map overlayed on top. Alternatively, two or more of the medical images may be blended together with the vector map overlayed on top. Alternatively, a suggested contour line may be extracted from the vector map and combined with one or more of the medical images to provide the user with a single image that they can use for easier anatomical contouring.

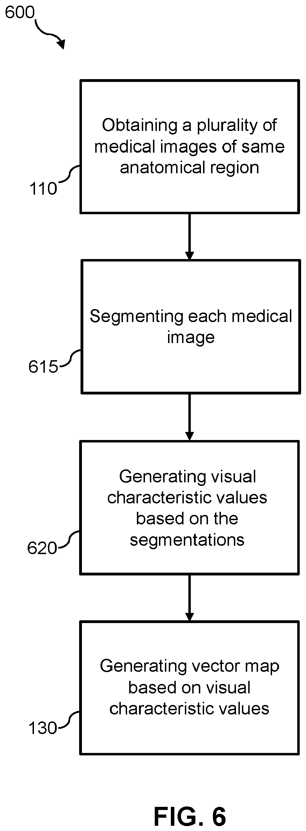

Referring now to Fig. 6, there is depicted a flow diagram of a method 600 for generating a vector map for anatomical contouring according to a proposed embodiment. Steps 110 and 130 are substantially the same as have been described in relation to method 100 in Fig. 1.

In step 615, each of the plurality of medical images are segmented. In step 620, at least one visual characteristic value is generated for each respective medical image based on the segmentation of each respective medical image. For example, the medical images may be segmented into one or more anatomical structures of interest, e.g., tumours, organs, and/or bones, etc., and other tissue. These segments can then be used to generate located edges in each medical image, which can then be used to generate the vector map indicating potential contour lines which delineate between the segments, i.e., between anatomical structure(s) and other tissue. Methods of segmenting medical images are known in the art.

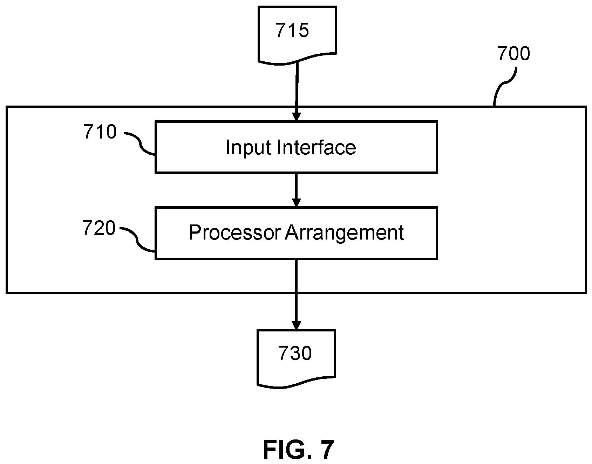

Referring now to Fig. 7, there is depicted a system 700 for generating a vector map for anatomical contouring according to a proposed embodiment. The system 700 comprises an input interface 710 and a processor arrangement 720.

The system 700 is configured to generate a vector map for anatomical contouring by processing inputs 715. The inputs 715 comprise a plurality of medical images including the same anatomical region, each medical image being captured using a different imaging modality or imaging sequence. The input interface 710 obtains the inputs 715 and the processor arrangement 720 is then configured to process each of the plurality of medical images to generate at least one visual characteristic value for each respective medical image. The processor arrangement 720 is configured to then generate an output 730 based on the generated plurality of visual characteristic values. The output 730 comprises a vector map, wherein the vector map describes a gradient field indicating at least one potential contour line for the anatomical region.

In some embodiments, the system 700 may further comprise an input device, wherein the input device comprises an electromechanical vibration system.

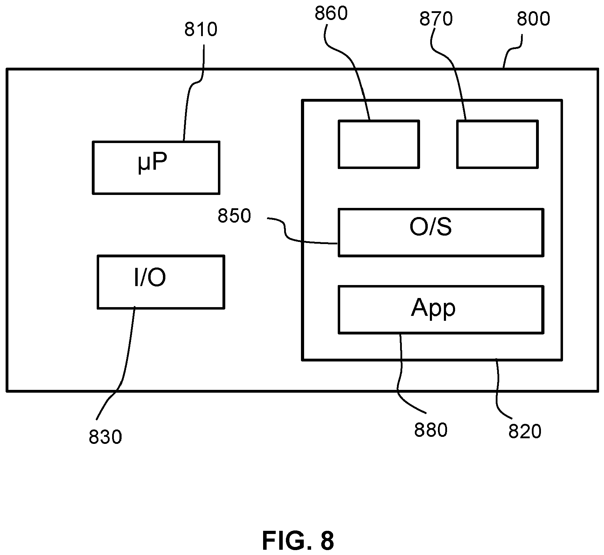

Fig. 8 illustrates an example of a computer 800 within which one or more parts of an embodiment may be employed. Various operations discussed above may utilize the capabilities of the computer 800. In this regard, it is to be understood that system functional blocks can run on a single computer or may be distributed over several computers and locations (e.g. connected via internet).

The computer 800 includes, but is not limited to, PCs, workstations, laptops, PDAs, palm devices, servers, storages, and the like. Generally, in terms of hardware architecture, the computer 800 may include one or more processors 810, memory 820 and one or more I/O devices 830 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 860, source code 870, and one or more applications 880 in accordance with exemplary embodiments. As illustrated, the application 880 comprises numerous functional components for implementing the features and operations of the exemplary embodiments. The application 880 of the computer 800 may represent various applications, computational units, logic, functional units, processes, operations, virtual entities, and/or modules in accordance with exemplary embodiments, but the application 880 is not meant to be a limitation.

The operating system 850 controls the execution of other computer programs, and provides scheduling, input-output control, file and data management, memory management, and communication control and related services. It is contemplated by the inventors that the application 880 for implementing exemplary embodiments may be applicable on all commercially available operating systems.

Application 880 may be a source program, executable program (object code), script, or any other entity comprising a set of instructions to be performed. When a source program, then the program is usually translated via a compiler (such as the compiler 860), assembler, interpreter, or the like, which may or may not be included within the memory 820, so as to operate properly in connection with the O/S 850. Furthermore, the application 880 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 830 may include input devices such as, for example but not limited to, a mouse, keyboard, scanner, microphone, camera, etc. Furthermore, the I/O devices 830 may also include output devices, for example but not limited to a printer, display, etc. Finally, the I/O devices 830 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 830 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at start-up, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 880 and the O/S 850 are read, in whole or in part, by the processor 810, perhaps buffered within the processor 810, and then executed.

When the application 880 is implemented in software it should be noted that the application 880 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 880 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1 and 3-6, and the system of Fig. 7, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 7 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for generating a vector map for anatomical contouring (100), the method comprising:
obtaining a plurality of medical images (110) including the same anatomical region, each medical image being captured using a different imaging modality or imaging sequence;
processing each of the plurality of medical images (120) to generate at least one visual characteristic value for each respective medical image; and
generating a vector map (130) based on the generated plurality of visual characteristic values, wherein the vector map describes a gradient field indicating at least one potential contour line for the anatomical region.

2. The method of claim 1, further comprising: determining at least one suggested contour line (340) based on the vector map.

3. The method of claim 2, further comprising: providing the at least one suggested contour line to a user (360).

4. The method of claim 3, wherein providing the at least one suggested contour line comprises:
generating a visual representation (350) of the at least one suggested contour line; and
providing the visual representation (360) of the at least one suggested contour line to the user.

5. The method of claim 4, wherein the visual representation is a transparent overlay.

6. The method of any of claims 3 to 5, wherein providing the at least one suggested contour line comprises: generating a feedback signal (460), configured to make an input device generate tactile feedback, based on the vector map and a current position of the input device, wherein the input device comprises an electromechanical vibration system.

7. The method of claim 6, wherein an input device comprises at least one of: a smart pen; a smart brush; a stylus; and a mouse.

8. The method of any prior claim, wherein processing each of the plurality of medical images comprises processing each of the plurality of medical images with a first model (520) to generate at least one visual characteristic value for each medical image, wherein the at least one visual characteristic value comprises located edges in each respective medical image.

9. The method any prior claim, wherein processing each of the plurality of medical images comprises:
segmenting each of the plurality of medical images (615); and
generating at least one visual characteristic value (620) for each respective medical image based on the segmentation of each respective medical image.

10. The method of any prior claim, further comprising: generating an output image (540) based on the vector map and at least one of the plurality of medical images.

11. The method of any prior claim, further comprising: obtaining a user-generated contour line (510) of at least one of the plurality of medical images, and wherein generating the vector map is further based on the user-generated contour line.

12. The method of any prior claim, further comprising: obtaining an identity of a user (515), and wherein generating the vector map is further based on the identity of the user.

13. The method of any prior claim, wherein generating the vector map is further based on the anatomical region included in the plurality of medical images.

14. A computer program comprising code means for implementing the method of any preceding claim when said program is run on a processing system.

15. A system (700) for generating a vector map for anatomical contouring, the system comprising:
an input interface (710) configured to:
obtain a plurality of medical images including the same anatomical region, each medial image being captured using a different imaging modality or imaging sequence; and
a processor arrangement (720) configured to:
process each of the plurality of medical images to generate at least one visual characteristic value for each respective medial image; and
generate a vector map based on the generated plurality of visual characteristic values, wherein the vector map describes a gradient field indicating at least one potential contour line for the anatomical region.
